# EUROPÄISCHE PATENTSCHRIFT

(11) **EP 2 143 606 B1**
(45) Veröffentlichungstag und Bekanntmachung des Hinweises auf die Patenterteilung: **13.04.2011**
(21) Anmeldenummer: 09009092.9
(22) Anmeldetag: 13.07.2009
(51) Int. Cl.: B60T 8/32, B60T 15/02

(54) **Elektropneumatische Bremseinrichtung eines Schienenfahrzeuges**
Electropneumatic braking device for a rail vehicle
Dispositif de freinage électropneumatique d'un véhicule sur rails

(30) Priorität: 11.07.2008 DE 102008032715
(43) Veröffentlichungstag der Anmeldung: 13.01.2010
(73) Patentinhaber: KNORR-BREMSE Systeme für Schienenfahrzeuge GmbH, 80809 München (DE)
(72) Erfinder: Englbrecht, Matthaeus, 81673 München (DE); Herden, Marc-Oliver, 81476 München (DE)
(74) Vertreter: Schönmann, Kurt

(56) Entgegenhaltungen:
- EP-A- 0 794 102
- EP-A- 1 486 681
- DE-A1-102005 010 118
- DE-A1-102006 047 440

## Beschreibung

Die vorliegende Erfindung betrifft eine elektropneumatische Bremseinrichtung eines Schienenfahrzeuges mit einer elektronischen Bremssteuereinheit zur Erzeugung eines elektrischen Bremssignals für Vorsteuerventile eines Ventils zur Beaufschlagung eines pneumatischen Bremszylinders, welcher daneben auch über Mittel zur Auslösung einer gleitgeschützten Notbremsung betreibbar ist. Daneben betrifft die Erfindung auch ein Verfahren zum Betrieb einer solchen Bremseinrichtung sowie auch ein Schienenfahrzeug, das mit der Bremseinrichtung auf verschiedene Art ausrüstbar ist.

Das Einsatzgebiet der vorliegenden Erfindung erstreckt sich auf Schienenfahrzeuge, welche per Druckluft gebremst werden. Zu diesem Zwecke wird ein hierzu pro Rad oder Radpaar oder Achse eingesetzter pneumatischer Bremszylinder durch ein pneumatisches Ventil mit einem im Schienenfahrzeug bevorrateten Bremsdruck beaufschlagt. Dies erfolgt über einen pneumatischen Vorsteuerkreis nach Maßgabe einer elektrischen Ansteuerung, die in der Regel von einer elektronischen Bremssteuereinheit nach Maßgabe einer manuell oder automatisch vorgebbaren Bremsanforderung erzeugt wird. Die elektronische Bremssteuereinheit umfasst dabei auch einen Gleitschutaechner, welcher in Abhängigkeit wenigstens eines von einem Gleitschutzsensor gelieferten Drehgeschwindigkeitssignals den Radschlupf der Räder wenigstens einer Achse regelt oder mit Rollüberwachungsmitteln die Drehgeschwindigkeit der Räder erfasst. Ferner ist auch ein Fahrwerksüberwachungsrechner Bestandteil einer modernen Bremssteuereinheit, welcher eine Diagnose des Fahrwerks im Hinblick auf kritische Zustände und Schäden, wie beispielsweise Entgleisung, heißgelaufene Lager und ähnliches, dient.

Aus der DE 10 2005 010 118 A1 geht eine gattungsgemäße elektropneumatische Bremseinrichtung hervor. Hierbei sind die Fahrwerksüberwachungsmittel gemeinsam mit der Gleitschutzsteuerung in einem einzigen elektronischen Bremssteuergerät integriert. An diesem sind eingangsseitig die Sensoren zur Ermittlung der momentanen Drehgeschwindigkeit der Räder angeschlossen. Die Bremssteuereinheit vergleicht die Radgeschwindigkeit mit der momentanen Geschwindigkeit des Schienenfahrzeuges und ist so in der Lage, einen Radschlupf zu erkennen. In diesem Falle wird der Bremsdruck zur Anpassung mittels elektropneumatischer Gleitschutzventile reduziert.

Dieser Gleitschutzmechanismus ist bei modernen Schienenfahrzeugen nicht allein während des normalen Bremsbetriebs aktiv, sondern soll auch bei einer Notbremsung funktionieren. In der Regel wird der Bremszylinderdruck für die Notbremsung rein pneumatisch, unabhängig von der Elektronik, erzeugt. Der Gleitschutz übt dabei prinzipiell die Funktion eines Druckreglers aus, wobei die Gleitschutzventile als Aktuatoren ansehbar sind. Um insbesondere den Gleitschutz während der Notbremsung zu realisieren, sind hohe Sicherheitsanforderungen an die Software nötig. So wird ein zu langes Ansteuern von Gleitschutzventilen, d.h. ein zu lange anhaltendes Verringern des Bremszylinderdrucks durch den Gleitschutz, gewöhnlich durch einen unabhängigen Überwachungsrechner innerhalb des Gleitschutzrechners unterbunden, in dem die Ansteuerung der Gleitschutzventile nach Überschreiten der maximal erlaubten Ansteuerdauer von mehreren Sekunden abgeschaltet wird.

So stellt die Integration eines Gleitschutzes für den normalen Bremsbetrieb wie auch für eine Notbremsung einen hohen insbesondere rechnertechnischen Aufwand dar. Darüber hinaus erfordern herkömmliche elektropneumatische Bremseinrichtungen mit Gleitschutzfunktion auch für die Notbremsung einen hohen Aufwand an Systemkomponenten, welche miteinander zuverlässig elektrisch wie teilweise auch druckmittelmäßig zu verbinden sind.

Es ist daher die Aufgabe der vorliegenden Erfindung eine elektropneumatische Bremseinrichtung sowie ein Verfahren zum Betrieb der selben zu schaffen, welche sowohl für den normalen Bremsbetrieb wie auch für eine Notbremsung unter Einsatz eines minimalen technischen Aufwands eine Bremszylinderdruckregelung sowie einen Gleitschutz zur Verfügung stellt.

Die Aufgabe wird ausgehend von einer elektropneumatischen Bremseinrichtung gemäß dem Oberbegriff von Anspruch 1 in Verbindung mit dessen kennzeichnenden Merkmalen gelöst. Verfahrenstechnisch wird die Aufgabe durch Anspruch 5 gelöst. Die jeweils rückbezogenen abhängigen Ansprüche geben vorteilhafte Weiterbildungen der Erfindung an.

Die Erfindung schließt die technische Lehre, dass die Vorsteuerventile zum Be- und Entlüften des Ventils zur Beaufschlagung der pneumatischen Bremszylinder jeweils mit zwei unabhängigen Wicklungspaaren auf der elektrischen Spule zur Betätigung der Ventilmechanik versehen sind, von denen das eine Spulenpaar mit der Bremssteuereinheit zur Erzeugung eines Bremssignals im normalen Bremsbetrieb und das andere Wicklungspaar mit dem Gleitschutzrechner zur Erfüllung der Gleitschutzfunktion verbunden sind, um eine gleitgeschützte Notbremsung neben einer normalen Betriebsbremsung zu verwirklichen. Das Ventil zur Beaufschlagung der pneumatischen Bremszylinders kann im Rahmen der Erfindung eine Relaisstufe enthalten oder ohne eine Relaisstufe ausgebildet sein.

Der Vorteil der erfindungsgemäßen Lösung liegt insbesondere darin, dass auf ansonsten übliche Komponenten, wie separate Bremsdruckregler und Gleitschutzventile gänzlich verzichtet werden kann und die erfindungsgemäße Einrichtung lässt sich mit einem bereits lastbegrenzten Maximaldruck entweder durch ein Lastbegrenzungsventil, welches den Versorgungsdruck entsprechend des momentanen Lastdrucks auf den jeweils aktuellen Notbremsdruck begrenzt, oder durch ein Steuerventil mit Lastbremsventilen versorgen. Dadurch steht vor den Gleitschutzventilen stets der aktuell gültige maximale Notbremsdruck zur Verfügung, welcher durch die elektronische Bremssteuereinheit durch Bestromung des einen Wicklungspaares entsprechend der aktuellen Bremsanforderung verringert werden kann, oder bei Bedarf auch ganz auf Null gesetzt werden kann, damit sich die Bremse löst.

Gemäß einer die Erfindung verbessernden Maßnahme wird vorgeschlagen, dass das Ventil einen den pneumatischen Ventilen nachgeschalteten Drucksensor zur Detektion des entstehenden Druck-Istwerts bei Betriebsbremsungen mit umfasst. Dieser Drucksensor wird erforderlich, um zuverlässig den gewünschten Soll-Betriebsbremsdruck regeln zu können und ein solcher zusätzlicher Drucksensor lässt sich in wenig aufwendige Weise direkt in das Ventil mit integrieren.

Nach einer anderen die Erfindung verbessernden Maßnahme wird vorgeschlagen, dass die elektrischen Ansteuerleitungen für die mit der Bremssteuereinheit verbundenen Wicklungspaare durch elektrische Relais unterbrechbar sind, welche nach Maßgabe einer elektrischen Notbremsschleife ansteuerbar sind. Im Falle einer elektrisch signalisierten Notbremsanforderung wird hierdurch die Druckregelung durch die Bremssteuereinheit unterbunden, der aktuelle Notbremsdruck wird damit ungehindert an die Bremszylinder geleitet und allein der Gleitschutzrechner hat vorteilhafterweise exklusiven Zugriff auf die Vorsteuerventile, welche in diesem Falle als Gleitschutzventile funktionieren. Mit dieser Maßnahme haben undefinierte Betriebszustände innerhalb der elektropneumatischen Bremseinrichtung keine Auswirkungen auf die Ansteuerungslogik.

Entsprechend einer weiteren die Erfindung verbessernden Maßnahme wird vorgeschlagen, dass in die Druckleitungen zu den Vorsteuerventilen je ein manuell oder elektrisch betätigbares Rückhalte- und Löseventil eingesetzt ist. Dieses zusätzliche Rückhalte- und Löseventil erlaubt ein Lösen der Bremsen, wenn das Schienenfahrzeug sich im stromlosen Zustand befindet, beispielsweise auf einem Abstellgleis. Das Rückhalte- oder Löseventil müsste bei Verwendung von elektrischen Relais für die Notbremsung allerdings in die elektrische Verschaltung mit eingebunden werden.

Die erfindungsgemäße elektropneumatische Bremseinrichtung lässt sich im Hinblick auf ihre verschiedenen Wicklungspaare der Vorsteuerventile nach Maßgabe der elektronischen Bremssteuereinheit sowie des Gleitschutzrechners zur Erzielung verschiedener Betriebszustände bestromen. So ist eine unterschiedliche Bestromung zwecks Bremsen im Normalbetrieb, Halten oder Lösen im Normalbetrieb oder auch Halten oder Lösen im gleitgeschützten Notbremsbetrieb u. a. darstellbar. Einzelheiten hierzu werden im Zusammenhang mit der nachfolgenden Figurenbeschreibung angegeben.

Vorzugsweise werden durch die vom Gleitschutzrechner angesteuerten Vorsteuerventile der Bremszylinderdruck unabhängig von den Vorgaben der Bremssteuereinheit nach Maßgabe der definierten Gleitschutzanforderungen gehalten oder reduziert. Hierdurch werden ebenfalls undefinierte Betriebszustände vermieden und eine gleitgeschützte Betriebs- oder Notbremsung lässt sich in zuverlässiger Weise ausführen.

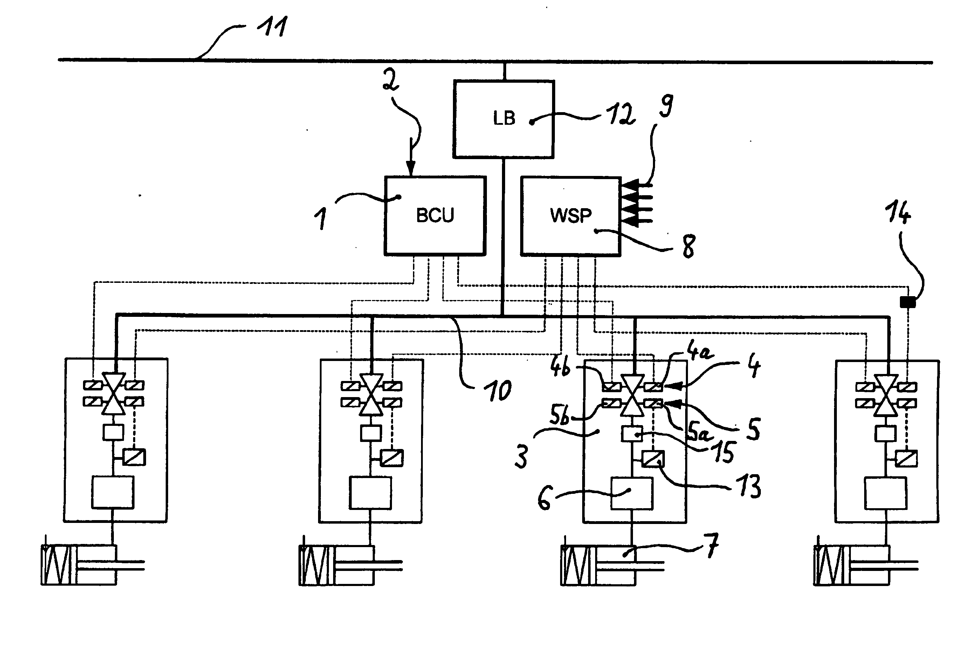

Weitere, die Erfindung verbessernde Maßnahmen werden nachstehend gemeinsam mit der Beschreibung eines bevorzugten Ausführungsbeispiels der Erfindung anhand der einzigen Figur näher dargestellt. Die Figur zeigt eine schematische Blockschaltbilddarstellung einer elektropneumatischen Bremseinrichtung eines Schienenfahrzeuges mit vier Achsen.

Gemäß Figur umfasst die elektropneumatische Bremseinrichtung eine elektronische Bremssteuereinheit 1, welche zur Erzeugung eines elektrischen Bremssignals ausgehend von einer vorgegebenen Bremsanforderung 2 dient. Ausgangsseitig steht die elektronische Bremssteuereinheit 1 mit je einem elektropneumatischen Ventil 3 pro Achse (exemplarisch) in Verbindung. Jedes Ventil 3 umfasst in diesem Ausführungsbeispiel ein Vorsteuerventil 4 zum Belüften sowie ein Vorsteuerventil 5 zum Entlüften einer nachgeschalteten Relaisstufe 6. Die nicht weiter im Detail dargestellte Relaisstufe 6 umfasst eine Ventilsitzmechanik zum Beaufschlagen des hieran ausgangsseitig angeschlossenen Bremszylinders 7 zum Betätigen nicht weiter dargestellter Bremsmittel.

Das Vorsteuerventil 4 zum Belüften der Vorsteuerung ist spulenseitig mit zwei unabhängigen Wicklungspaaren 4a und 4b versehen. Analog hierzu ist das andere Vorsteuerventil 5 zum Entlüften der Vorsteuerung ebenfalls mit zwei unabhängigen Wicklungspaaren 5a, 5b versehen. Während die Wicklungen 4a und 5a beider.Vorsteuerventile 4 und 5 von der elektrischen Bremssteuereinheit 1 zur Umsetzung eines normalen Bremsbetriebs angesteuert werden, werden die anderen Wicklungspaare 4b und 5b - welche unabhängig von den erstgenannten Wicklungspaaren existieren - der Vorsteuerventile 4 und 5 durch einen Gleitschutzrechner 8 angesteuert. Hierdurch kann die elektropneumatische Bremseinrichtung eine gleitgeschützte Bremsung auslösen, in dem auf die selben Vorsteuerventile 4 und 5 eingewirkt wird, welche auch zur Durchführung einer normalen Betriebsbremsung dienen.

Der Gleitschutzrechner 8 verarbeitet eingangsseitig gleitschutzrelevante Sensorsignale 9. Die Vorsteuerventile 4 und 5 jedes Ventils 3 werden mit einem lastbegrenzten Steuerdruck gespeist. Zu diesem Zwecke ist in die Steuerdruckleitung 10 zur Hauptbehälterleitung 11 hin eine Lastbegrenzungseinheit 12 eingebunden.

Jedes Ventil 3 umfasst weiterhin einen integrierten Drucksensor 13, welcher den Vorsteuerventilen 4 und 5 nachgeschaltet ist, um den Ist-Druck zu erfassen. Der erfasste Druck wird der Bremssteuereinheit 1 zur Signalverarbeitung der Bremszylinderdruckregelung zugeführt. Ferner ist in die elektrischen Ansteuerleitungen für die mit der Bremssteuereinheit 1 verbundenen Wicklungspaare 4a und 5a ein elektrisches Relais 14 zwischengeschaltet. Mit dem elektrischen Relais 14 kann nach Maßgabe einer elektrischen Notbremsschleife die Verbindung der elektrischen Ansteuerleitungen unterbrochen werden, wenn eine Notbremsung zu erfolgen hat.

Zusätzlich kann ein manuell oder elektrisch betätigtes Rückhalte- und Löseventil 15 eingesetzt werden, welches entweder vor dem Ventil 3 in die Speiseleitung 10 platziert wird oder in die Druckleitungen von den Vorsteuervenitlen 4 und 5 zur Relaisstufe 6 hin.
Dieses ist ggf. direkt in das Ventil 3 integriert und von außen z.B. per Knopfdruck betätigbar.

Die vorstehend beschriebene elektropneumatische Bremseinrichtung kann entsprechend der nachfolgenden exemplarisch dargestellten Betriebszustände angesteuert werden:

Zum Bremsen im Normalbetrieb werden alle Wicklungspaare 4a, 4b, 5a, 5b der Vorsteuerventile 4 und 5 nicht bestromt. Hierdurch wird der Bremszylinder 7, welcher nach Art eines Aktiv-Zylinders ausgebildet ist, belüftet und die Bremsen werden hierdurch betätigt.

Zum Halten während des Normalbetriebs wird lediglich die Wicklung 4a des Vorsteuerventils 4 zum Belüften durch die Bremssteuereinheit 1 bestromt.

Das Lösen der Bremsen erfolgt im Normalbetrieb dadurch, dass die beiden Wicklungen 4b und 5b der Vorsteuerventile 4 und 5 zum Be- und Entlüften von der Bremssteuereinheit 1 bestromt werden. Die anderen Wicklungen sollen unbestromt bleiben.

Zum Halten im gleitgeschützten Notbremsbetrieb wird die Wicklung 4a des Vorsteuerventils 4 zum Belüften durch den Gleitschutzrechner 8 bestromt, wogegen das Vorsteuerventil 5 zum Entlüften stets unbestromt bleibt.

Das Lösen im gleitgeschützten Notbremsbetrieb wird unabhängig von der Bestromung der mit der Bremssteuereinheit 1 verbundenen Wicklungen 4b und 5b der beiden Vorsteuerventile 4 und 5 dadurch erreicht, dass alle Wicklungen 4a und 5a, welche am Gleitschutzrechner 8 angeschlossen sind, bestromt werden.

Generell gilt, dass die vom Gleitschutzrechner 8 angesteuerten Wicklungen 4a und 5a der Vorsteuerventile 4 bzw. 5 den Druck im Bremszylinder 7 unabhängig von den Vorgaben der Bremssteuereinheit 1 nach Maßgabe der durch den Gleitschutzrechner 8 verwirklichten Gleitschutzanforderungen betrieben werden.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, die erfindungsgemäße elektropneumatische Bremseinrichtung für nur eine Achse oder ein Drehgestell eines Schienenfahrzeuges zu konzipieren. Die erfindungsgemäße Lösung ist prinzipiell flexibel hinsichtlich der Anzahl der hiermit ansteuerbaren Bremszylinder. Mit der erfindungsgemäßen Lösung wird eine Unabhängigkeit von Gleitschutz und Druckregelung verwirklicht. Damit werden bewährte Sicherheitskonzepte unverändert beibehalten und existierende Funktionalitäten für den Gleitschutz inklusive derer amtlicher Zulassungen können weiter verwendet werden. Mit der erfindungsgemäßen elektropneumatischen Bremseinrichtung kann darüber hinaus eine Fail-Save-Funktion umgesetzt werden, in dem bei Ausfall der Spannungsversorgung das Schienenfahrzeug gebremst werden kann. Gegenüber herkömmlichen Bremseinrichtungen mit dem gleichen Funktionsumfang kommt die erfindungsgemäße Lösung mit weniger Systemkomponenten, insbesondere Relais, Regler, Sensoren und Elektronikplatinen aus. Da hiermit auch eine achsselektive Druckregelung möglich ist, kann eine höhere Effizienz und Genauigkeit sowie geringere Ansprechzeiten erzielt werden.

### Bezugszeichenliste

- 1: elektronische Bremssteuereinheit
- 2: Bremsanforderungssignal
- 3: Ventil
- 4: Vorsteuerventil zum Belüften
- 4a, 4b: Wicklung (-spaar)
- 5: Vorsteuerventil zum Entlüften
- 5a, 5b: Wicklung (-spaar)
- 6: Relaisstufe
- 7: Bremszylinder
- 8: Gleitschutzrechner
- 9: Gleitschutzsignale
- 10: Speisedruckleitung
- 11: Hauptbehälterleitung
- 12: Lastbegrenzungseinheit
- 13: Drucksensor
- 14: Relais
- 15: Rückhalte- und Löseventil

## Patentansprüche

1. Elektropneumatische Bremseinrichtung für ein Schienenfahrzeug mit einer elektronischen Bremssteuereinheit (1) zur Erzeugung eines elektrischen Bremssignals für Vorsteuerventile (4, 5) eines Ventils (3) zur Beaufschlagung eines pneumatischen Bremszylinders (7), welcher daneben auch über Mittel zur Auslösung einer gleitgeschützten Notbremsung betreibbar ist,
**dadurch gekennzeichnet, dass** die Vorsteuerventile (4; 5) zum Be- bzw. Entlüften mit je unabhängigen Wicklungspaaren (4a, 4b; 5a, 5b) versehen sind, von denen das eine Wicklungspaar (4b, 5b) mit der Bremssteuereinheit (1) und das andere Wicklungspaar (4a, 5a) mit einem Gleitschutzrechner (8) zur gleitgeschützten Betriebs- und Notbremsung verbunden ist.

2. Elektropneumatische Bremseinrichtung nach Anspruch 1,
**dadurch gekennzeichnet, dass** das Ventil (3) einen den Vorsteuerventilen (4, 5) und/oder einer Relaisstufe (6) nachgeschalteten Drucksensor (13) zur Detektion des bei Normalbetrieb entstehenden Druck-Istwertes der Betriebsbremse umfasst.

3. Elektropneumatische Bremseinrichtung nach Anspruch 1,
**dadurch gekennzeichnet, dass** die elektrischen Ansteuerleitungen für die mit der Bremssteuereinheit (1) verbundenen Wicklungspaare (4b, 5b) durch elektrische Relais (14) unterbrechbar sind, die nach Maßgabe einer elektrischen Notbremsschleife angesteuert sind.

4. Elektropneumatische Bremseinrichtung nach Anspruch 1,
**dadurch gekennzeichnet, dass** in die Druckleitungen von den Vorsteuerventilen (4, 5) zur Relaisstufe (6) je ein manuell oder elektrisch betätigbares Rückhalte- und Löseventil (15) eingesetzt ist.

5. Verfahren zum Betrieb einer Bremseinrichtung eines Schienenfahrzeuges, bei welcher mit einer elektronischen Bremssteuereinheit (1) nach Maßgabe einer Bremsanforderung ein elektrisches Bremssignals für Vorsteuerventile (4, 5) eines Ventils (3) zur Beaufschlagung eines pneumatischen Bremszylinders (1) erzeugt wird, welcher daneben auch über eine gleitgeschützte Notbremsung betrieben wird,
**dadurch gekennzeichnet, dass** zum Be- und Entlüften mit je unabhängigen Wicklungspaaren (4a, 4b; 5a, 5b) versehene Vorsteuerventile (4, 5) mit einem Wicklungspaar (4b, 5b) mit der Bremssteuereinheit (1) und mit dem anderen Wicklungspaar (4a, 5a) mit einem Gleitschutzrechner (8) zur gleitgeschützten Betriebs- und Notbremsung verbunden werden.

6. Verfahren nach Anspruch 5,
**dadurch gekennzeichnet, dass** zum Bremsen im Normalbetrieb alle Wicklungspaare (4a, 4b, 5a, 5b) der Vorteuerventile (4, 5) zum Be- bzw. Entlüften nicht bestromt werden.

7. Verfahren nach Anspruch 5,
**dadurch gekennzeichnet dass** zum Halten des Bremszylinderdruckes im Normalbetrieb lediglich die Wicklung (4b) des Vorsteuerventils (4) zum Belüften von der Bremssteuereinheit (1) bestromt wird.

8. Verfahren nach Anspruch 5,
**dadurch gekennzeichnet, dass** zum Lösen im Normalbetrieb die beiden Wicklungspaare (4b, 5b) der Vorsteuerventile (4, 5) zum Be- und Entlüften von der Bremssteuereinheit (1) bestromt werden.

9. Verfahren nach Anspruch 5,
**dadurch gekennzeichnet, dass** zum Halten im Normal- und Notbremsbetrieb die Wicklung (4a) des Vorsteuerventils (4) zum Belüften vom Gleitschutzrechner (8) bestromt wird, wogegen das Vorsteuerventil (5) zum Entlüften stets unbestromt bleiben.

10. Verfahren nach Anspruch 5,
**dadurch gekennzeichnet, dass** zum Lösen im gleitgeschützten Normal- und Notbremsbetrieb unabhängig von der Bestromung der mit der Bremssteuereinheit (1) verbundenen Vorsteuerventile (4, 5) alle am Gleitschutzrechner (8) angeschlossenen Wicklungen (4a, 5a) bestromt werden.

11. Verfahren nach Anspruch 5,
**dadurch gekennzeichnet, dass** durch die vom Gleitschutzrechner (8) angesteuerten Wicklungen (4a, 5a) der Bremszylinderdruck unabhängig von den Vorgaben der Bremssteuereinheit (1) nach Maßgabe der definierten Gleitschutzanforderungen gehalten oder reduziert wird.

12. Schienenfahrzeug, welches pro Achse, pro Drehgestell oder pro Wagen mit einer elektropneumatischen Bremseinrichtung nach einem der vorstehenden Ansprüche 1 bis 4 ausgerüstet ist.

## Claims

1. Electropneumatic braking device for a rail vehicle, comprising an electronic brake control unit (1) for the generation of an electric braking signal for pilot valves (4, 5) of a valve (3) for pressurising a pneumatic brake cylinder (7) which can in addition be operated via means for triggering a skid-protected emergency braking action,
**characterised in that** the pilot valves (4; 5) are provided with independent pairs of windings (4a, 4b; 5a, 5b) for ventilation and bleeding respectively, one pair of windings (4b, 5b) being connected to the brake control unit (1) and the other pair of windings (4a, 5a) being connected to an antiskid computer (8) for skid-protected service and emergency braking action.

2. Electropneumatic braking device according to claim 1,
**characterised in that** the valve (3) comprises a pressure sensor (13) located downstream of the pilot valves (4, 5) or of a relay stage (6) for the detection of an actual pressure value of the service brake which is generated in normal operation.

3. Electropneumatic braking device according to claim 1,
**characterised in that** the electric control lines for the windings (4b, 5b) connected to the brake control unit (1) can be disconnected by electric relays (14) which are selected in accordance with an electric emergency braking loop.

4. Electropneumatic braking device according to claim 1,
**characterised in that** a manually or electrically operated detent and release valve (15) is installed into each of the pressure lines from the pilot valves (4, 5) to the relay stage (6).

5. Method for the operation of a braking device of a rail vehicle, wherein, in accordance with a braking request, an electric braking signal for pilot valves (4, 5) of a valve (3) is generated by means of an electronic brake control unit (1) for the pressurisation of a pneumatic brake cylinder (1) which is in addition operated via a skid-protected emergency braking action,
**characterised in that** pilot valves (4, 5) provided with independent pairs of windings (4a, 4b; 5a, 5b) for ventilation and bleeding are connected to the brake control unit (1) with one pair of windings (4b, 5b) and to an antiskid computer (8) for skid-protected service and emergency braking actions with the other pair of windings (4a, 5a).

6. Method according to claim 5,
**characterised in that** for braking in normal operation, all of the pairs of windings (4a, 4b, 5a, 5b) of the pilot valves (4, 5) for ventilation and bleeding are not energised.

7. Method according to claim 5,
**characterised in that** for holding the brake cylinder pressure in normal operation, only the winding (4b) of the pilot valve (4) for ventilation is energised by the brake control unit (1).

8. Method according to claim 5,
**characterised in that** for release in normal operation, the two pairs of windings (4b, 5b) of the pilot valves (4, 5) for ventilation and bleeding are energised by the brake control unit (1).

9. Method according to claim 5,
**characterised in that** for holding in normal and emergency braking operation, the winding (4a) of the pilot valve (4) for ventilation is energised by the antiskid computer (8), whereas the pilot valve (5) for bleeding remains non-energised.

10. Method according to claim 5,
**characterised in that** for release in skid-protected normal and emergency braking operation, all windings (4a, 5a) connected to the antiskid computer (8) are energised irrespective of the energising of the pilot valves (4, 5) connected to the brake control unit (1).

11. Method according to claim 5,
**characterised in that** the brake cylinder pressure is held or reduced by the windings (4a, 5a) selected by the antiskid computer (8) independent of the presets of the brake control unit (1) in accordance with defined antiskid requirements.

12. Rail vehicle equipped with an electropneumatic braking device according to any of the preceding claims 1 to 4 for each axle, each bogie or each coach.

## Revendications

1. Dispositif de freinage électropneumatique d'un véhicule sur rail, comprenant une unité (1) électronique de commande de freinage pour la production d'un signal électrique de freinage pour des vannes (4, 5) pilotes d'une vanne (3) d'alimentation d'un cylindre (7) pneumatique de frein qui peut fonctionner en outre par des moyens de desserrage d'un frein d'urgence protégé vis-à-vis du patinage,
**caractérisé en ce que** les vannes (4, 5) pilotes sont pourvues, pour l'alimentation en air et la purge d'air, respectivement de paires (4a, 4b, ; 5a, 5b) indépendantes d'enroulements, dont l'une (4b, 5b) est reliée à l'unité (1) de commande de freinage et l'autre (4a, 5a) a un ordinateur (8) de protection vis-à-vis du patinage pour le freinage de service et d'urgence protégé vis-à-vis du patinage.

2. Dispositif électropneumatique de freinage suivant la revendication 1, **caractérisé en ce que** la vanne (3) comprend un capteur (13) de pression, qui est monté en aval des vannes (4, 5) pilotes et/ou d'un étage (6) de relais et qui est destiné à la détection de la valeur réelle de la pression du frein de service se produisant en fonctionnement normal.

3. Dispositif électropneumatique de freinage suivant la revendication 1, **caractérisé en ce que** les lignes électriques de commande des paires (4b, 5b) d'enroulements reliées à l'unité (1) de commande de freinage peuvent être interrompues par des relais (14) électriques qui sont commandés en fonction d'une boucle électrique de freinage d'urgence.

4. Dispositif électropneumatique de freinage suivant la revendication 1, **caractérisé en ce que** respectivement une vanne (15) retardatrice et de desserrage pouvant être actionnée manuellement ou électriquement est insérée dans les lignes de pression allant des vannes (4, 5) pilotes à l'étage (6) de relais.

5. Procédé pour faire fonctionner un dispositif de freinage d'un véhicule sur rail, dans lequel on produit par une unité (1) électronique de commande de freinage, suivant une exigence de freinage, un signal électrique de freinage pour des vannes (4, 5) pilotes d'une vanne (3) d'alimentation d'un cylindre (1) pneumatique de frein, qui fonctionne en outre aussi par un freinage d'urgence protégé vis-à-vis du patinage,
**caractérisé en ce que** les vannes (4, 5) pilotes sont pourvues pour l'alimentation en air et la purge d'air, respectivement de paires (4a, 4b, ; 5a, 5b) indépendantes d'enroulements, dont l'une (4b, 5b) est reliée à l'unité (1) de commande de freinage et l'autre (4a, 5a) à un ordinateur (8) de protection vis-à-vis du patinage pour le freinage de service et d'urgence protégé du patinage.

6. Procédé suivant la revendication 5, **caractérisé en ce que**, pour le freinage en fonctionnement normal, toutes les paires (4a, 4b, 5a, 5b) d'enroulements des vannes (4, 5) pilotes ne sont pas alimentées en courant électrique pour l'alimentation en air ou la purge.

7. Procédé suivant la revendication 5, **caractérisé en ce que**, pour le maintien de la pression du cylindre de frein en fonctionnement normal, seul l'enroulement (4b) de la vanne (4) pilote est alimentée en courant électrique par l'unité (1) de commande de freinage pour l'alimentation en air.

8. Procédé suivant la revendication 5, **caractérisé en ce que**, pour le desserrage en fonctionnement normal, les deux paires (4b, 5b) d'enroulements des vannes (4, 5) pilotes sont alimentées en courant électrique par l'unité (1) de commande de freinage pour l'alimentation en air et la purge.

9. Procédé suivant la revendication 5, **caractérisé en ce que**, pour le maintien en fonctionnement de freinage normal et d'urgence, l'enroulement (4a) de la vanne (4) pilote est alimentée en courant électrique par l'ordinateur (8) de protection vis-à-vis du patinage pour l'alimentation en air, tandis que la vanne (5) pilote reste toujours non alimentée en courant électrique pour la purge.

10. Procédé suivant la revendication 5, **caractérisé en ce que**, pour le desserrage en fonctionnement de freinage normal et d'urgence protégé vis-à-vis du patinage, tous les enroulements (4a, 5a) raccordés à l'ordinateur (8) de protection vis-à-vis du patinage sont alimentés en courant électrique indépendamment de l'alimentation en courant électrique des vannes (4, 5) pilotes reliées à l'unité (1) de commande de freinage.

11. Procédé suivant la revendication 5, **caractérisé en ce que**, par les enroulements (4a, 5a) commandés par l'ordinateur (8) de protection vis-à-vis du patinage, la pression du cylindre de frein est, en fonction des exigences d'anti-patinage qui sont définies, maintenue ou réduite indépendamment des prescription de l'unité (1) de commande de frein.

12. Véhicule sur rail qui, par essieu, par boggie ou par voiture est équipé d'un dispositif électropneumatique de freinage suivant l'une des revendications précédentes 1 à 4.
